# FASCICULE DE BREVET EUROPEEN

(11) **EP 1 384 916 B1**
(45) Date de publication et mention de la délivrance du brevet: **14.09.2005**
(21) Numéro de dépôt: 03016867.8
(22) Date de dépôt: 24.07.2003
(51) Int. Cl.: F16F 7/108

(54) **Dispositif à boites modulaires suspendues, apte à amortir les vibrations et procédé de réalisation**
Vorrichtung aus hängenden Kastenmodulen zur Schwingungsdämpfung und Herstellungsverfahren
Device with hanging modular boxes for damping of vibrations and manufacuring method

(30) Priorité: 25.07.2002 IT GE20020068
(43) Date de publication de la demande: 28.01.2004
(73) Titulaire: IMPRESA MARINONI srl, 16152 Genova (IT)
(72) Inventeur: Ronco, Romeo, 16124 Genova (IT)
(74) Mandataire: Maritano Maello, Giovanna

(56) Documents cités:
- CA-A- 1 255 337
- DE-A- 2 525 653
- US-A- 4 353 433
- PATENT ABSTRACTS OF JAPAN vol. 1998, no. 04, 31 mars 1998 (1998-03-31) & JP 09 328858 A (KAWASAKI STEEL CORP), 22 décembre 1997 (1997-12-22)
- PATENT ABSTRACTS OF JAPAN vol. 010, no. 238 (M-508), 16 août 1986 (1986-08-16) & JP 61 070242 A (MARUGO GOMME KOGYO KK), 11 avril 1986 (1986-04-11)
- PATENT ABSTRACTS OF JAPAN vol. 2002, no. 09, 4 septembre 2002 (2002-09-04) & JP 2002 147524 A (MITSUBISHI HEAVY IND LTD), 22 mai 2002 (2002-05-22)

## Description

La présente invention concerne un dispositif à boîtes modulaires suspendues, apte à amortir les vibrations, ainsi que le procédé de réalisation correspondant.

Selon la technique connue, pour amortir les vibrations, on étend du matériau absorbant sur les structures devant être isolées, par exemple sur les ponts des navires ou sur les planchers des bâtiments.

Selon la technique connue, ledit matériau absorbant est constitué par une première couche d'une masse élastique et par une deuxième couche rigide, constituée par du matériau cimentaire ou bien par des plaques métalliques contiguës, qui sont très lourdes.

Selon la technique connue, pour amortir les vibrations on peut également utiliser un système appelé flottant. Dans ce cas on utilise, comme masse élastique, des panneaux en laine de roche, sur lesquels est ensuite posée la jetée cimentaire.

Parfois, quand les vibrations sont particulièrement intenses, pour augmenter l'effet amortissant, on peut utiliser en même temps la méthode avec la masse élastique et le système flottant.

L'inconvénient principal de la technique connue est que le matériau absorbant, qui est placé sur les zones soumises à de plus fortes vibrations, a une épaisseur considérable, par exemple dans la mesure de 65 mm., face à des épaisseurs nettement inférieures dans la partie restante, d'environ 6ö10 mm. Il en suit que, entre une zone et l'autre de la même structure devant être isolée, se créent des gradins qui, non seulement dérangent la surface traitée laquelle, de cette façon, n'est pas totalement sur un même niveau, mais également et surtout ils créent des difficultés lors de la phase suivante d'aménagement. En effet, en correspondance des différentes cotes du même plancher, les éléments montés sur celui-ci ne peuvent plus être de série, étant donné qu'ils doivent avoir des hauteurs différentes, comme par exemple à bord, pour les panneaux des cabines, avec une augmentation consécutive des temps et des coûts pour la coupe et le montage de ceux-ci.

Un autre inconvénient de la technique connue est que, du point de vue de l'aménagement, il faut faire particulièrement attention à la fixation au sol des panneaux de séparation. Par exemple, lors de la fixation à bord des panneaux des cabines au moyen du système flottant, qui doit être effectuée en utilisant des clous généralement fixés sur la couche absorbante, il faut prendre soin de ne pas toucher la structure, autrement le contact métallique pourrait provoquer un ponte sonore.

Un inconvénient ultérieur de la technique connue est que l'emploi des méthodes pour amortir les vibrations comporte une augmentation du poids qui, en particulier dans les navires, doit être évitée aussi bien que possible. Le poids augmente ultérieurement si, pour amortir les vibrations ayant une intensité particulière, on adopte les deux méthodes associées.

Le Brevet CA1255337 décrit un amortisseur de vibrations constiué par deux masses séparées par un matériau élastique qui sont montées grâce à une structure centrale appropriée. Ladite invention présente toutefois l'inconvénient d'avoir une capacité limitée de vibration. En effet, étant donnée la rigidité du dispositif dans son ensemble, dans le cas de vibrations d'une certaine intensité, il risquera de vibrer lui-même.

Tous les inconvénients mentionnés ont été éliminés avec la réalisation de la présente invention, dont l'emploi est particulièrement avantageux, par exemple dans le secteur naval.

Le but de la présente invention est d'obtenir l'amortissement des vibrations au moyen d'un dispositif qui laisse libre la surface supérieure de la structure devant être isolée et, en même temps, soit plus léger par rapport à la technique connue et ne crée pas des ponts sonores.

Dans ce but, on a réalisé un dispositif comme défini par la revendication 1, constitué par des boîtes modulaires réalisées au moyen d'un boîtier, contenant un produit viscoélastique dans lequel est insérée une lame dentée, à appliquer au-dessous de la structure devant être isolée, comme par exemple sous un pont ou bien sous un plancher, de façon séquentielle.

Le boîtier est en tôle métallique pliée en forme de U, partiellement remplie avec le produit viscoélastique apte à retenir la lame, qui a un côté long denté et le côté opposé opportunément plié; sur le fond du boîtier est placée une bande en mousse isolante.

Le premier des nombreux avantages que l'on obtient avec la présente invention est que - depuis la surface supérieure de la structure devant être isolée, ponts ou planchers - on élimine les gradins dus à l'application des couches anti-vibrations, permettant ainsi de ne pas troubler le plan d'appui, et que les panneaux, par exemple des cabines à bord des navires, qui généralement ont des hauteurs de série, peuvent être montés plus rapidement, avec une réduction conséquente des temps et des coûts.

Un avantage ultérieur du dispositif à boîtes modulaires, appliquées au-dessous des ponts ou des planchers, selon la présente invention, est qu'on élimine le problème de la fixation au sol au moyen du clouage à adopter avec le système flottant, par exemple pour les panneaux des cabines, étant donné que ceux-ci pourront être soudés directement sur le pont, selon le procédé normal de fixation.

Un autre avantage du dispositif à boîtes modulaires apte à amortir les vibrations, selon la présente invention, est que l'on réduit considérablement le poids de la structure, étant donné que la couche rigide supérieure est éliminée et, en outre, le poids n'est plus réparti de façon uniforme sur toute la surface concernée par les vibrations, mais il se limite au poids des boîtes appliquées de façon séquentielle au-dessous du pont.

Tous les avantages susdits et d'autres encore, apparaîtront évidents dans la description des figures suivantes, jointes uniquement à titre d'illustration et non pas limitatif, dans lesquelles:
Fig. 1 représente une vue axonométrique de la boîte modulaire apte à amortir les vibrations, selon la présente invention.
Fig. 2 illustre une section longitudinale de la boîte modulaire apte à amortir les vibrations, selon le plan III-III indiqué dans la figure 3;
Fig. 3 montre une section transversale de la boîte modulaire apte à amortir les vibrations, selon le plan II-II indiqué dans la figure 2.

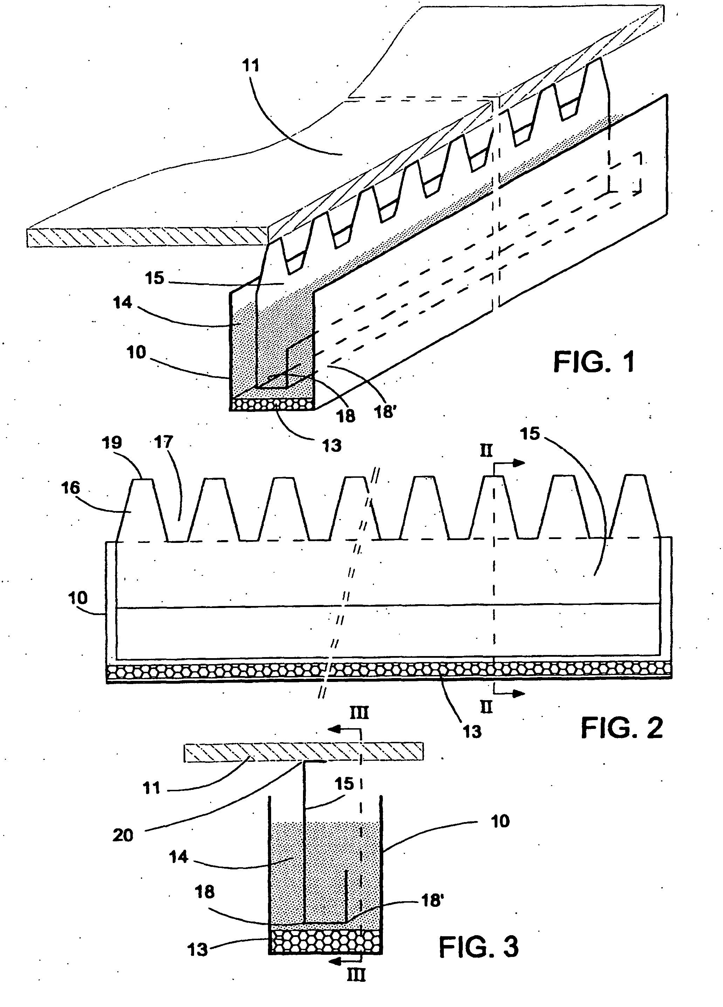

Dans la figure 1 la boîte modulaire, selon la présente invention, est représentée en vue axonométrique. Elle est constituée par un boîtier 10 en tôle métallique pliée en forme de U, rempli avec un produit viscoélastique 14, dans lequel est insérée une lame 15, qui a un côté long façonné de telle manière qu'il forme une série de dents 16 et de creux 17 en succession, entre eux similaires et ayant une forme substantiellement trapézoïdale, alors que sur le côté opposé à celui denté, sont obtenues deux pliures longitudinales 18 et 18', avec un angle de 90°, dans le but de raidir la lame dentée 15 et d'empêcher qu'elle puisse éventuellement sortir du produit viscoélastique 14. Sur le fond du boîtier 10 est appliquée une bande en mousse 13 isolante, de nature polyuréthanique auto-adhésive.

Pendant l'opération de remplissage du boîtier 10, pour empêcher la sortie du produit viscoélastique 14, on ferme les extrémités ouvertes du boîtier 10, par exemple avec un ruban toilé (non illustré) qui doit être enlevé lorsque le produit est sec.

Ensuite, on insère dans le produit viscoélastique 14 la lame dentée 15, en la laissant soulevée par rapport à la bande de mousse 13 et en la bloquant opportunément dans cette position, jusqu'au durcissement du produit viscoélastique 14.

Quand le produit viscoélastique 14 est durci, la boîte modulaire est complétée et elle est disponible pour son installation.

Le produit viscoélastique 14 est de préférence de nature polyuréthanique à deux composants, et il remplit le boîtier 10 jusqu'à environ 5/6 de son hauteur. La bande en mousse 13 a la fonction d'empêcher au produit viscoélastique 14 d'adhérer sur le fond. En effet, sur la base des essais effectués, il s'est produit que l'efficacité amortissante augmente si ledit produit 14 adhère uniquement aux parois verticales du boîtier 10.

La lame dentée 15 est en métal, avec une épaisseur d'environ 1,5 mm. et, comme illustré plus clairement dans la figure 2, elle reste soulevée par rapport à la bande en mousse 13 pour une hauteur d'environ 3 mm.

La boîte modulaire est positionnée, par exemple au-dessous du pont 11 d'un navire, avec la lame dentée 15 perpendiculaire à la surface sur laquelle elle doit être fixée, de préférence avec une inclinaison de 45° par rapport au plan des profilés de renforcement des locaux.

Ladite boîte modulaire est fixée sur la surface inférieure du pont 11, en soudant les têtes 19, on commence avec les têtes 19 des deux dents terminales 16, puis on continue en soudant les têtes 19 intermédiaires.

Étant donné que le pont 11 d'un navire est difficilement plat, la lame dentée 15 permet d'obtenir une liaison solidaire de la boîte modulaire avec le pont 11, dans n'importe quelle condition. En effet, si le pont 11 a un profil ondulé irrégulier, la partie supérieure de chaque dent intermédiaire 16 est éventuellement pliée selon une ligne 20, avec un angle de 90° environ, à des hauteurs différentes, de façon à s'adapter exactement au profil de la surface inférieure du pont 11 sur laquelle elle doit être soudée, comme illustré dans la figure 3.

Toutes les boîtes sont ainsi fixées au-dessous du pont 11 de façon séquentielle, en maintenant une distance de 400 mm. de préférence entre une boîte modulaire et la suivante.

Les vibrations du pont 11 sont transmises de façon univoque aux boîtes modulaires appliquées sur sa surface inférieure, au moyen des lames dentées 15, et le produit viscoélastique 14, dans lequel elles sont insérées, les amortit et empêche aux masses rigides vibrantes d'entrer en résonance.

Sur le fond du boîtier 10, la bande en mousse 13 est appliquée sur toute sa longueur.

Comme produit viscoélastique 14, il est possible d'utiliser avantageusement celui qui est connu dans le commerce sous le nom de "RESIDECK".

La présente invention comprend toutes les variantes du détail et les modifications qui peuvent sembler évidentes à un technicien du secteur et qui ne sortent pas du cadre de la présente invention mais doivent donc être considérées comme étant comprises dans le cadre des revendications suivantes.

## Revendications

1. Dispositif apte à amortir les vibrations et à être suspendu de façon séquentielle au-dessous de la structure devant être isolée constitué par des boîtes modulaires formées par un boîtier (10) **caractérisé par le fait que** le boîtier (10) est constitué par une tôle métallique pliée en forme de U, contenant un produit viscoélastique (14) dans lequel est insérée une lame dentée (15) qui a un côté long façonné de telle manière qu'il forme une série de dents (16) et de creux (17) en succession, pour le positionnement et la fixation de la boîte modulaire, et que la lame dentée (15) a, sur le côté opposé à celui denté, deux pliures longitudinales (18,18') avec un angle de 90°destinées à être insérées dans le produit viscoélastique (14).

2. Dispositif selon la revendication 1, **caractérisé par le fait que** la boîte modulaire est préalablement fixée au-dessous de la structure (11) au moyen de la soudure des têtes (19) des deux dents (16) terminales et que, ensuite, la partie supérieure de chaque dent (16) intermédiaire est éventuellement pliée avec un angle de 90° environ, pour être adaptée au profil de la surface inférieure de la structure (11).

3. Dispositif selon la revendication 1, **caractérisé par le fait que** sur le fond du boîtier (10) est appliquée une bande en mousse (13).

4. Dispositif selon les revendications 1 et 3, **caractérisé par le fait que** la bande en mousse (13) est de nature polyuréthanique auto-adhésive et qu'elle est appliquée sur le fond du boîtier (10) sur toute sa longueur.

5. Dispositif selon la revendication 1, **caractérisé par le fait que** le produit viscoélastique (14) est de nature polyuréthanique à deux composants et qu'il est introduit dans le boîtier (10) jusqu'à 5/6 de sa hauteur.

6. Dispositif selon la revendication 1, **caractérisé par le fait que** la lame dentée (15) est en métal et que son épaisseur est de 1,5 mm.

7. Dispositif selon la revendication 1, **caractérisé par le fait que** les dents (16) et les creux (17) sont similaires entre eux et qu'ils ont une forme substantiellement trapézoïdale.

8. Dispositif selon les revendications 1 et 3, **caractérisé par le fait que** la lame dentée (15) est soulevée de 3 mm. par rapport à la bande en mousse (13).

9. Dispositif selon la revendication 1, **caractérisé par le fait que** la boîte modulaire est positionnée, avec la lame dentée (15) perpendiculaire à la surface sur laquelle elle doit être fixée et avec une inclinaison à 45° par rapport au plan des profilés de renforcement des locaux.

10. Dispositif selon la revendication 1, **caractérisée par le fait que** toutes les boîtes sont fixées en maintenant une distance de 400 mm. entre une boîte modulaire et la suivante.

11. Procédé pour la réalisation d'un dispositif selon la revendication 1, **caractérisé par le fait que** sur le fond du boîtier (10) est appliquée une bande en mousse (13) que, après avoir fermé les extrémités ouvertes dudit boîtier (10), celui-ci est rempli avec le produit viscoélastique (14) jusqu'à 5/6 de sa hauteur et que, par la suite, dans ledit produit (14), est introduite la lame dentée (15), et que la lame dentée (15) est maintenue soulevée par rapport à la bande en mousse (13) et elle est maintenue dans ladite position jusqu'au durcissement du produit viscoélastique (14).

## Claims

1. Device for dampening of vibrations designed to be hung sequentially, underneath the structure to be insulated, and featuring modular boxes formed by a case (10) **characterized by** the fact that the case (10) consists of a U-shape bent metal plate containing a viscoelastic product (14) in which a toothed plate is inserted (15), which has one long side shaped to form a set of serially arranged teeth (16) and slots (17), for positioning and securing of the modular box, and that the toothed plate (15) features, opposite to the toothed side, two longitudinal bends (18,18') forming a 90° angle to be placed inside the viscoelastic product (14).

2. Device according to claim 1, **characterized by** the fact that the modular box is first secured underneath the structure (11) by welding the heads (19) of both end teeth (16) and then the top of each middle tooth (16) can be bent to form a 90° angle, in order to fit to the structure bottom profile (11).

3. Device according to claim 1, **characterized by** the fact that a sponge strip (13) is applied on the bottom of the case (10).

4. Device according to claims 1 and 3, **characterized by** the fact that the sponge strip (13) consists of self-adhesive polyurethane material and that it is applied along the full length of the case bottom (10).

5. Device according to claim 1, **characterized by** the fact that the viscoelastic product (14) consists of a bicomponent polyurethane material and that it is filled inside the case (10) up to 5/6^{th} of its height.

6. Device according to claim 1, **characterized by** the fact that the toothed plate (15) is made of 1.5 mm thick metal.

7. Device according to claim 1, **characterized by** the fact that the teeth (16) and the slots (17) are similar with a basically trapezoid shape.

8. Device according to claims 1 and 3, **characterized by** the fact that the toothed plate (15) is placed at a height of 3 mm from the sponge strip (13).

9. Device according to claim 1, **characterized by** the fact that the modular box is placed with the toothed plate (15) perpendicular to the surface on which it has to be secured and with a 45° slant from the plane of the room beams.

10. Device according to claim 1, **characterized by** the fact that all modular boxes are mounted with a 400 mm distance between them.

11. Method for the manufacturing of a device as per claim 1. **characterized by** the fact that a sponge strip (13) is applied on the case (10) bottom and that, after having closed the open ends of said case (10), the latter is filled with a viscoelastic product (14) up to 5/6^{th} of its height, and that inside said product (14) the toothed plate (15) is then placed and that said toothed plate (15) is kept raised from the sponge strip (13) until the viscoelastic product (14) has fully hardened.

## Patentansprüche

1. Vorrichtung zur Dämpfung der Vibrationen und zur aufeinander folgenden Aufhängung unter der zu isolierenden Struktur bestehend aus modularen Kästen, die sich aus einem Gehäuse (10) zusammensetzen, **dadurch gekennzeichnet, dass** sich das Gehäuse (10) aus einem u-förmig gebogenen Blech zusammensetzt, in dem ein viskoelastisches Produkt (14) enthalten ist, in das wiederum ein Zahnblech (15) eingefügt ist, dessen lange geformte Seite so ausgebildet ist, dass eine Reihe von aufeinander folgenden Zähnen (16) und Aussparungen (17) für die Positionierung und die Befestigung des modularen Kastens gebildet wird, und dass das Zahnblech (15) auf der Seite, die der verzahnten Seite gegenüberliegt, zwei Längsbiegungen (18, 18') mit einem Winkel von 90° aufweist, die in das viskoelastische Produkt (14) eingefügt werden.

2. Vorrichtung gemäß Anspruch 1, **dadurch gekennzeichnet, dass** der modulare Kasten zuerst unter der Struktur (11) befestigt wird, und zwar durch Verschweißen der Köpfe (19) der zwei Endzähne (16) und dass danach der obere Teil eines jeden Zwischenzahns (16) eventuell mit einem Winkel von ca. 90° gebogen wird, damit dieser an das Profil der unteren Fläche der Struktur (11) angepasst werden kann.

3. Vorrichtung gemäß Anspruch 1, **dadurch gekennzeichnet, dass** am Boden des Gehäuses (10) ein Schwammstreifen (13) angebracht ist.

4. Vorrichtung gemäß den Ansprüchen 1 und 3, **dadurch gekennzeichnet, dass** der Schwammstreifen (13) aus Polyurethan mit einem selbstklebenden Klebestreifen hergestellt und am Boden des Gehäuses (10), und zwar über dessen ganze Länge angebracht ist.

5. Vorrichtung gemäß Anspruch 1, **dadurch gekennzeichnet, dass** das viskoelastische Produkt (14) aus Zweikomponenten-Polyurethan hergestellt ist und in das Gehäuse (10) bis zu 5/6 seiner Höhe eingefügt wird.

6. Vorrichtung gemäß Anspruch 1, **dadurch gekennzeichnet, dass** das Zahnblech (15) aus Metall hergestellt ist und eine Stärke von 1,5 mm aufweist.

7. Vorrichtung gemäß Anspruch 1, **dadurch gekennzeichnet, dass** die Zähne (16) und die Aussparungen (17) untereinander ähnlich sind und im Wesentlichen eine Trapezform aufweisen.

8. Vorrichtung gemäß den Ansprüchen 1 und 3, **dadurch gekennzeichnet, dass** das Zahnblech (15) hinsichtlich des Schwammstreifens (13) um 3 mm angehoben ist.

9. Vorrichtung gemäß Anspruch 1, **dadurch gekennzeichnet, dass** der modulare Kasten mit dem Zahnblech (15), das sich senkrecht zur Oberfläche befinden muss, an der es befestigt wird, mit einem Winkel von 45° hinsichtlich der Ebene der Verstärkungsprofile der Räumlichkeiten positioniert wird.

10. Vorrichtung gemäß Anspruch 1, **dadurch gekennzeichnet, dass** alle modulare Kästen in einem Abstand von jeweils 400 mm befestigt werden.

11. Verfahren für die Herstellung einer Vorrichtung gemäß Anspruch 1, **dadurch gekennzeichnet, dass** am Boden des Gehäuses (10) ein Schwammstreifen (13) angebracht ist, dass nach dem Schließen der Enden des zuvor genannten Gehäuses (10) dieses bis zu 5/6 seiner Höhe mit dem viskoelastischen Produkt (14) gefüllt wird und danach in eben dieses Produkt (14) ein Zahnblech (15) eingeführt wird, das hinsichtlich des Schwammstreifens (13) angehoben ist und durch die Verhärtung des viskoelastischen Produkts (14) in dieser Position gehalten wird.
